# EUROPÄISCHE PATENTSCHRIFT

(11) **EP 3 706 588 B1**
(45) Veröffentlichungstag und Bekanntmachung des Hinweises auf die Patenterteilung: **05.01.2022**
(21) Anmeldenummer: 18804527.2
(22) Anmeldetag: 05.11.2018
(51) Int. Cl.: A24C 5/35, B65G 17/08, B65G 17/46, B65G 47/94

(54) **TRANSPORTKETTE, TRANSPORTVORRICHTUNG UND TRANSPORTVERFAHREN FÜR STABFÖRMIGE PRODUKTE DER TABAK VERARBEITENDEN INDUSTRIE**
CONVEYOR CHAIN, CONVEYING DEVICE AND CONVEYING METHOD FOR ROD-SHAPED PRODUCTS OF THE TOBACCO PROCESSING INDUSTRY
CHAÎNE DE TRANSPORT, DISPOSITIF DE TRANSPORT ET PROCÉDÉ DE TRANSPORT POUR DES PRODUITS EN FORME DE TIGES DE L'INDUSTRIE DU TABAC

(30) Priorität: 09.11.2017 DE 102017126247
(43) Veröffentlichungstag der Anmeldung: 16.09.2020
(73) Patentinhaber: Hauni Maschinenbau GmbH, 21033 Hamburg (DE)
(72) Erfinder: HARTMANN, Florian, 21502 Geesthacht (DE)
(74) Vertreter: Müller Verweyen
(86) Internationale Anmeldenummer: PCT/EP2018/080139
(87) Internationale Veröffentlichungsnummer: WO 2019/091906

(56) Entgegenhaltungen:
- EP-A1- 0 478 833
- EP-A1- 1 655 242
- EP-A1- 2 911 957
- EP-B1- 1 655 242
- EP-B1- 2 911 957

## Beschreibung

Die vorliegende Erfindung betrifft eine Transportkette mit den Merkmalen des Oberbegriffs von Anspruch 1, eine Transportvorrichtung mit den Merkmalen des Oberbegriffs von Anspruch 8 und ein Transportverfahren mit den Merkmalen des Oberbegriffs von Anspruch 12.

Derartige Transportketten, Transportvorrichtungen und Transportverfahren werden immer dann eingesetzt, wenn stabförmige Produkte der Tabak verarbeitenden Industrie, wie z.B. fertige Zigaretten, Zigarillos oder Zwischenprodukte wie Filterstäbe oder Tabakstöcke von einem Punkt A zu einem Punkt B transportiert werden müssen. Bei fertigen Zigaretten oder Zigarillos dienen die Transportketten in den Transportvorrichtungen insbesondere zu einem Transport der Produkte von einer Herstellmaschine zu einer Packmaschine. Die stabförmigen Produkte liegen dabei in einem Massenstrom aus mehreren übereinander angeordneten Lagen aus einzelnen Produkten mit quer zu der Transportrichtung ausgerichteten Längsachsen auf einer Auflagefläche der Transportkette auf und werden während der Antriebsbewegung der Transportkette über die Auflagefläche reibschlüssig quer zu ihren Längsrichtungen in Richtung der Transportbewegung der Transportkette mitgenommen. Die Transportkette selbst ist aus mehreren gelenkig miteinander verbundenen Kettengliedern zusammengesetzt, welche so verbunden sind, dass sie um jeweils eine quer zu der Transportrichtung und parallel zu der Auflagefläche der Transportkette ausgerichtete erste Schwenkachse zueinander verschwenkbar sind. Damit kann die Transportkette zu ihrem Antrieb oder auch zur Umlenkung auf einem Antriebsrad oder einem Umlenkrad umgelenkt werden.

Da z.B. die Herstellmaschine und die Packmaschine gemäß den örtlichen Gegebenheiten beim Hersteller der Produkte angeordnet werden müssen, müssen die Produkte auf einem Transportweg von der Herstellmaschine zu der Packmaschine transportiert werden, welcher individuell für den Hersteller und die spezielle Herstellmaschine bzw. Packmaschine und deren Aufstellorte ausgelegt werden muss. Dieser Transportweg kann neben Kurven auch zu überwindende Höhenunterschiede, in Form von Steigungen oder Vertikaltransportabschnitten, Sammelstellen, Verzweigungsstellen und vorgesehene Staustellen umfassen. Die Transportkette muss daher zusätzlich so ausgebildet sein, dass die Kettenglieder zusätzlich um zweite Schwenkachsen zueinander verschwenkbar sind, welche senkrecht zu der Transportrichtung und senkrecht zu den ersten Schwenkachsen bzw. senkrecht zu der Auflagefläche der Transportkette ausgerichtet sind. Damit kann die Transportkette zur Verwirklichung von Kurven in dem Transportweg entsprechend gekrümmt werden, wobei sich die Abstände der Kettenglieder an dem inneren Radius der Kurve verringern und an dem äußeren Radius vergrößern. Damit entstehen in der Kurve der Transportkette an dem äußeren Radius größere Spalte und an dem inneren Radius kleinere Spalte zwischen den Kettengliedern.

Eine solche Transportkette ist z.B. aus der EP 1 655 242 A1, der US 2004/0149548 A1 oder der DE 691 27 289 T2 bekannt.

Bei modernen sogenannten "Heat Not Burn"-Produkten, welche auch als HNB-Produkte abgekürzt werden, müssen außerdem in dem Herstellverfahren Vorprodukte oder auch Unterbaugruppen, wie z.B. einzelne kurze Röhren mit einem Hohlraum transportiert werden, welche leichter und auch kürzer als die fertigen bisher transportierten Produkte sind. Damit müssen die Produkte bei gleicher Stapelhöhe in einem Stapel mit einem erheblich größeren Verhältnis der Stapelhöhe zu der Breite des Stapels und einem erheblich geringeren Gewicht und einer dadurch bedingten erheblich größeren Kippneigung transportiert werden. Diese neuen Umstände können dazu führen, dass der Stapel der Produkte unter Einwirkung von Querkräften im Extremfall umkippt, oder dass einzelne Produkte ihre vorbestimmte Ausrichtung verlieren und damit den Transport der Produkte stören.

Vor diesem Hintergrund liegt der Erfindung die Aufgabe zugrunde, eine Transportvorrichtung, eine Transportkette und ein Transportverfahren für einen verbesserten Transport der Produkte bereitzustellen.

Zur Lösung der Aufgabe wird erfindungsgemäß eine Transportvorrichtung, eine Transportkette und ein Transportverfahren mit den Merkmalen von Anspruch 1, den Merkmalen von Anspruch 8 und den Merkmalen von Anspruch 12 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird zur Lösung der Aufgabe vorgeschlagen, dass an wenigstens einem der beiden Enden jeweils eines Kettengliedes mindestens ein Stützelement vorgesehen ist, welches zu dem Kettenglied um eine dritte, in Längsrichtung der Transportkette ausgerichtete Schwenkachse verschwenkbar ist.

Die Transportkette dient dem Transport der auf den Kettengliedern aufliegenden Produkte, wobei sich die Oberflächen der Kettenglieder zu einer Auflagefläche ergänzen, auf der die Produkte reibschlüssig mitgenommen und als Stapel transportiert werden. Durch die vorgeschlagene Erfindung kann der auf der Auflagefläche transportierte Stapel zusätzlich seitlich gestützt werden, indem das Stützelement seitlich in Richtung des Stapels verschwenkt wird und eine zusätzliche seitliche Stützwand für den Stapel bildet. Eine solche Lösung ist insbesondere bei einem sehr instabilen Stapel mit einer/m sehr großen Höhe/Breitenverhältnis und einer dadurch bedingten erhöhten Kippneigung von Vorteil. Je nach dem Ort der Kippgefährdung des Stapels können die Stützelemente nur an bestimmten Abschnitten des Transportweges seitlich zu dem Stapel verschwenkt werden, so dass entlang des Transportweges nur lokale Stützflächen geschaffen werden. Das Stützelement kann in der Form und in den Abmessungen so gestaltet werden, dass der Stapel an einer hinsichtlich der Kippneigung besonders kritischen Abschnitt durch das herangeschwenkte Stützelement durch eine optimale seitliche Stützfläche unterstützt wird, wobei die Stützfläche also die Oberfläche des Stützelementes insbesondere so geformt sein kann, dass in dieser Fläche auch die Transportbewegung berücksichtigt ist. Das bedeutet zum Beispiel, dass wenn das Stützelement in einer Kurve an den Stapel herangeschwenkt werden soll, die Oberfläche des Stützelementes eine der Kurve in Transportrichtung entsprechende Krümmung aufweisen sollte.

Weiter wird vorgeschlagen, dass das Stützelement eine größere Erstreckung quer zu der Transportrichtung aufweist, als die maximale Höhe des zu transportierenden Stapels. Damit wird der Stapel durch das Stützelement über die gesamte Höhe seitlich gestützt.

Weiter wird vorgeschlagen, dass an mehreren Kettengliedern jeweils ein Stützelement vorgesehen ist, und die Stützelemente der Kettenglieder unabhängig voneinander gegenüber jeweils einem Kettenglied verschwenkbar sind. Durch die vorgeschlagene Weiterentwicklung kann die Stützfläche erstens vergrößert werden, indem sich die Oberflächen der Stützelemente zu einer vergrößerten Stützfläche ergänzen. Zweitens kann die Stützfläche in sich variabel ausgebildet werden, indem die Stützelemente einzeln und unabhängig voneinander gegenüber den Kettengliedern verschwenkt werden. Dadurch kann durch die Stützelemente eine Stützfläche mit einer in Transportrichtung variablen Kontur verwirklicht werden. Ferner können die Stützelemente sukzessiv in eine vorgesehene Stützposition an einem vorbestimmten Abschnitt des Transportweges verschwenkt und sukzessiv aus dieser wieder heraus verschwenkt werden.

Weiter wird vorgeschlagen, dass die Stützelemente mit Verzahnungen ineinander greifen, wobei die Verzahnungen an den einander zugewandten Randseiten angeordnet sind, sich in Längsrichtung der Stützelemente erstrecken und derart ausgerichtet sind, dass die Zahnlücken in Bezug zu der Umfangsrichtung um die dritten Schwenkachsen offen sind und die Stützelemente durch die offenen Zahnlücken eine Relativbewegung um die dritten Schwenkachsen zueinander ausführen können. Die Stützelemente bilden damit einen in sich beweglichen Verbund mit einer in gewissen Grenzen variablen Oberfläche, wobei die ineinander greifenden Zähne jeweils die Übergänge zwischen den Stützflächen der Stützelemente bilden. Durch die ineinander greifenden Zähne der Verzahnungen mit der vorgeschlagenen Anordnung und Ausrichtung wird in Längsrichtung der Stützelemente ein formschlüssiger Verbund gebildet, während sich die Stützelement in Umfangsrichtung zu den dritten Schwenkachsen zueinander bewegen können, also bewusst Relativbewegungen zueinander ausführen können.

Insbesondere können an den Kettengliedern eine Vielzahl von sich zu einer Stützwand ergänzenden Stützelementen vorgesehen sein. Die Stützelemente grenzen dabei unmittelbar aneinander an und bilden dadurch die Stützwand. Je nach der Formgebung kann an jedem der Kettenglieder jeweils ein Stützelement vorgesehen sein, wodurch eine besonders flexible Stützwand gebildet werden kann. Alternativ wäre es aber auch denkbar, nur an jedem zweiten, dritten oder vierten Kettenglied ein Stützelement vorzusehen und das Stützelement entsprechend breiter in Transportrichtung zu formen, so dass sie sich seitlich über mehrere Kettenglieder erstrecken und dennoch unmittelbar aneinander angrenzen.

Weiter wird vorgeschlagen, dass die Bewegungen der Stützelemente zueinander durch Anschläge begrenzt sind. Damit wird vermieden, dass zwischen den Stützelementen zu große Ecken und/oder Lücken entstehen können. Der Verbund der Stützelemente wird praktisch in sich versteift, indem die Beweglichkeit der Stützelemente zueinander begrenzt wird. Damit kann vermieden werden, dass einzelne Produkte in die Ecken oder die Freiräume zwischen den Stützelementen eintreten und dadurch die Beweglichkeit der Stützelemente zueinander blockieren und/oder die Transportbewegung stören.

Ferner können auch die Bewegungen der Stützelemente zu den Kettengliedern durch Anschläge begrenzt sein, so dass die Stützelemente nur bis zu einer vorbestimmten Grenzstellung zu den Kettengliedern bewegt werden können. Dadurch kann vermieden werden, dass die Stützelemente z.B. durch die Einwirkung von äußeren Kräften soweit zu den Kettengliedern hin verschwenkt werden, dass sie den Stapel nicht mehr seitlich stützen, sondern stattdessen aktiv zum Kippen bringen. Ferner kann durch die Anschläge eine für die seitliche Führung des Stapels optimierte Sollstellung definiert werden.

In einer nicht beanspruchten Ausführungsform können die Anschläge derart positioniert sein, dass das Stützelement maximal um einen Winkel von 90 Grad um die dritte Schwenkachse zu dem Kettenglied verschwenkbar ist. Das Stützelement kann dadurch maximal in einen rechten Winkel zu dem Kettenglied verschwenkt werden, wodurch die Wahrscheinlichkeit eines Umkippens des Stapels reduziert werden kann. Sofern der Stapel mit einem rechteckigen Querschnitt transportiert werden soll, ist es sinnvoll, das Stützelement genau in einen Winkel von 90 Grad zu dem Kettenglied zu verschwenken, so dass der Stapel sowohl an der Unterseite als auch an seiner Seitenfläche möglichst großflächig unterstützt wird. Dabei hat der Transport des Stapels in einem rechteckigen Querschnitt den besonderen Vorteil, dass die Produkte dadurch mit ihren Stirnflächen jeweils eine Ebene bilden und dadurch besonders gut geführt werden können.

In einer nicht beanspruchten Ausführungsform wird vorgeschlagen, dass wenigstens eines der Kettenglieder eine mittig angeordnete Formschlussgestaltung zum Eingriff einer Antriebseinrichtung aufweist. Die Transportkette wird damit mittig über das Kettenglied angetrieben. Dadurch kann das Auffächern der Kettenglieder und der Stützelemente auf ein Minimum reduziert werden, wodurch wiederum die Wahrscheinlichkeit eines Eintretens eines Produktes zwischen die Kettenglieder und/oder zwischen die Stützelemente und einer dadurch bedingten Blockade der Transportbewegung reduziert werden kann.

Weiter wird zur Lösung der Aufgabe eine Transportvorrichtung mit einer derartigen Transportkette vorgeschlagen, bei der eine feststehende erste Führungsfläche vorgesehen ist, an welcher die Transportkette während der Transportbewegung mit den Stützelementen zur Anlage gelangt, wobei die erste Führungsfläche eine derartige Kontur aufweist, dass die Stützelemente während der Transportbewegung durch die Anlage an der ersten Führungsfläche in eine Winkelstellung zu den Kettengliedern gedrängt werden. Durch die erste Führungsfläche wird die Bewegung der Stützelemente zu den Kettengliedern gesteuert, indem die Transportkette mit den Stützelementen an der Führungsfläche anliegt, wobei die Stützelemente aufgrund ihrer erfindungsgemäßen Beweglichkeit zu den Kettengliedern durch die Transportbewegung der Transportkette gesteuert durch die Formgebung der ersten Führungsfläche zu den Kettengliedern verschwenkt werden. Die Transportkette gleitet während der Transportbewegung mit den Stützelementen an der ersten Führungsfläche entlang, wodurch die Stützelemente aufgrund ihrer Beweglichkeit dem Verlauf der ersten Führungsfläche folgen und dadurch gegenüber den Kettengliedern verschwenken.

Weiter wird vorgeschlagen, dass die erste Führungsfläche derart geformt ist, dass der Winkel zwischen einer Horizontalebene und der ersten Führungsfläche in Transportrichtung wenigstens abschnittsweise zunimmt. Die erste Führungsfläche steigt damit in Transportrichtung rampenförmig an, so dass die daran anliegenden Stützelemente kontinuierlich aus der Ausrichtung in der Horizontalebene in die vorbestimmte Stellung der Stützposition bewegt werden. Damit kann die Relativbewegung zwischen den in Transportrichtung aneinander angrenzenden Stützelementen reduziert werden, wodurch wiederum die Größe der dabei entstehenden Ecken, Freiräume und Stufen zwischen den Stützelementen reduziert werden kann.

Dabei kann die erste Führungsfläche zumindest abschnittsweise in einem Winkel von kleiner als 90 Grad vorzugsweise von 85 bis 60 Grad zu einer Horizontalebene ausgerichtet sein. Die vorgeschlagene Ausrichtung definiert die Ausrichtung der daran anliegenden Stützelemente, in welcher diese den Stapel seitlich unterstützten. Da der Winkel bevorzugt kleiner als 90 Grad ist, wird der Stapel dadurch seitlich leicht gegen die Stützelemente gekippt und damit vorausgerichtet, so dass die Wahrscheinlichkeit eines unkontrollierten Kippens des Stapels zu der freien Seite der Transportkette verringert werden kann.

Ferner wird vorgeschlagen, dass eine zweite Führungsfläche vorgesehen ist, auf der die Transportkette mit den Kettengliedern wenigstens abschnittsweise aufliegt, welche die Ausrichtung der Kettenglieder durch ihre Formgebung während der Transportbewegung vorgibt. Durch die zweite Führungsfläche wird zusätzlich die Ausrichtung der Kettenglieder während der Transportbewegung definiert, wobei die Oberfläche der Kettenglieder die Auflagefläche für den zu transportierenden Stapel der Produkte bildet, so dass dadurch aufgrund der festen Lagebeziehung der Oberfläche der Kettenglieder und der Anlagefläche der Kettenglieder an der zweiten Führungsfläche auch die Ausrichtung der Auflagefläche und damit der Unterseite des zu transportierenden Stapels vorgegeben werden kann.

In einer nicht beanspruchten Ausführungsform wird weiter vorgeschlagen, dass die zweite Führungsfläche in einem Winkel von vorzugsweise kleiner als 20 Grad zu einer Horizontalebene in Richtung der Stützelemente abfallend ausgerichtet ist. Durch die vorgeschlagene Ausrichtung der zweiten Führungsfläche wird der Stapel in Richtung der Stützelemente gekippt, so dass er leicht gegen die Stützelemente gekippt wird und damit eine Vorausrichtung erfährt. Damit kann die Wahrscheinlichkeit weiter verringert werden, dass der Stapel zu der anderen freien Seite der Kettenglieder kippt. Der Stapel kann dadurch während der Transportbewegung stabilisiert werden, was insbesondere bei Stapeln aus leichten Produkten mit einem großen Höhen-/Breitenverhältnis von Vorteil ist.

In einer nicht beanspruchten Ausführungsform kann die Transportbewegung des Stapels weiter verbessert werden, indem die Kettenglieder auf der zweiten Führungsfläche quer zu der Transportrichtung seitlich geführt sind. Durch die vorgeschlagene Weiterentwicklung werden die Führung der Transportkette und damit auch der Transport des darauf aufliegenden Stapels der Produkte verbessert.

Die Ausrichtung der Stützelemente zu der durch die Oberfläche der Kettenglieder gebildeten Auflagefläche des Stapels kann gemäß einer nicht beanspruchten Ausführungsform weiter verbessert werden, indem die erste Führungsfläche und die zweite Führungsfläche in einer festen räumlichen Beziehung zueinander angeordnet sind. Diese feste räumliche Beziehung kann am einfachsten dadurch realisiert werden, indem die beiden Führungsflächen an einem einzigen Teil angeordnet sind. Damit kann die Führung der Produkte insbesondere hinsichtlich äußerer Einwirkungen und Fertigungsungenauigkeiten der Transportvorrichtung verbessert werden.

In einer nicht beanspruchten Ausführungsform sind die erste und die zweite Führungsfläche in einem Winkel von 90 Grad zueinander ausgerichtet, wodurch ein Stapel mit einem rechteckigen Querschnitt besonders gut transportiert werden kann, bei dem die Stirnseiten der Produkte jeweils ebene, parallele Flächen bilden.

Weiter wird zur Lösung der Aufgabe ein Transportverfahren für stabförmige Produkte der Tabak verarbeitenden Industrie mit einem bandförmigen Endlosfördermittel, auf dem die Produkte in einem Stapel in einer Ausrichtung mit quer zu einer Transportrichtung ausgerichteten Längsachsen aufliegen vorgeschlagen, bei dem an wenigstens einer Randseite des Endlosfördermittels eine verschwenkbare Stützwand vorgesehen ist, welche wenigstens in einer Kurve in eine Winkelstellung in Richtung des auf dem Endlosfördermittel aufliegenden Stapels der Produkte verschwenkt wird.

Das vorgeschlagene Transportverfahren ist insofern von Vorteil, da dadurch die Führung des Stapels genau an der hinsichtlich des Kippens kritischen Stelle nämlich der Kurve verbessert wird, indem in der Kurve seitlich eine Stützwand in eine Winkelstellung zu dem Endlosfördermittel in Richtung des darauf aufliegenden Stapels verschwenkt wird. In der Kurve wirken auf den Stapel Querkräfte welche die Kippwahrscheinlichkeit des zu transportierenden Stapels erhöhen. Je nach der Richtung, in welche der Stapel aufgrund der auftretenden Kräfte tendiert zu kippen, kann die Stützwand dann entweder an der Radialinnenseite oder auch an der Radialaußenseite des Endlosfördermittels vorgesehen sein.

Die Bewegung der Stützwand kann dabei besonders einfach durch das Anliegen an einer ersten Führungsfläche während der Transportbewegung gesteuert werden, an der die Stützwand während der Transportbewegung entlang gleitet. Die Bewegung der Stützwand wird dabei durch die Form der ersten Führungsfläche und insbesondere durch die Formänderung der ersten Führungsfläche in Transportrichtung definiert.

Weiter wird vorgeschlagen, dass das Endlosfördermittel wenigstens abschnittsweise in einen Winkel, vorzugsweise von kleiner als 20 Grad, zu einer Horizontalebene in Richtung der Stützwand abfallend verschwenkt wird. Durch das vorgeschlagene Verschwenken des Endlosfördermittels und damit auch der Auflagefläche für den zu transportierenden Stapel, wird der aufliegende Stapel leicht in Richtung der Stützwand gekippt, so dass er sich an dieser anlehnt.

Dabei wird die Stützwand bevorzugt an der Seite des Endlosfördermittels verschwenkt, welche den Innenradius der Kurve bildet. Diese Lösung ist insbesondere in Kombination mit dem Verschwenken des Endlosfördermittels in eine Stellung mit in Richtung des Innenradius abfallender Auflagefläche von Vorteil, da der Stapel dadurch zu der Radialinnenseite leicht gegen die dort hochgeschwenkte Stützwand gekippt wird, und dadurch in eine Ausrichtung gelangt, in welcher sich der Stapel gegenüber den wirkenden Zentrifugalkräften zu der Radialaußenseite der Kurve besonders gut auf der Auflagefläche abstützt.

Die Erfindung wird im Folgenden anhand einer bevorzugten Ausführungsform unter Bezugnahme auf die beigefügten Figuren erläutert. Dabei zeigt
- Fig. 1: einen Ausschnitt einer erfindungsgemäßen Transportvorrichtung mit einer erfindungsgemäßen Transportkette in Schrägansicht; und
- Fig. 2: die Transportvorrichtung aus der Figur 1 in Sicht von oben; und
- Fig. 3: einen vergrößerten Ausschnitt des Auslaufs der Transportvorrichtung in Sicht von oben; und
- Fig. 4: einen vergrößerten Ausschnitt des Einlaufs der Transportvorrichtung in Schrägansicht; und
- Fig. 5: eine vergrößerte Darstellung der Transportkette in einer ersten Kurve; und
- Fig. 6: eine vergrößerte Darstellung der Transportkette in einer zweiten Kurve; und
- Fig. 7: eine vergrößerte Darstellung der Transportkette in Sicht auf die verschwenkten Stützelemente von schräg unten; und
- Fig. 8: ein einzelnes Kettenglied in verschiedenen Ansichten; und
- Fig. 9: ein einzelnes Kettenglied auf einer Führungsschiene der Transportvorrichtung; und
- Fig. 10: die Transportkette mit einem Basisteil der Transportvorrichtung in einer ersten Ansicht; und
- Fig. 11: die Transportkette mit einem Basisteil der Transportvorrichtung in einer zweiten Ansicht.

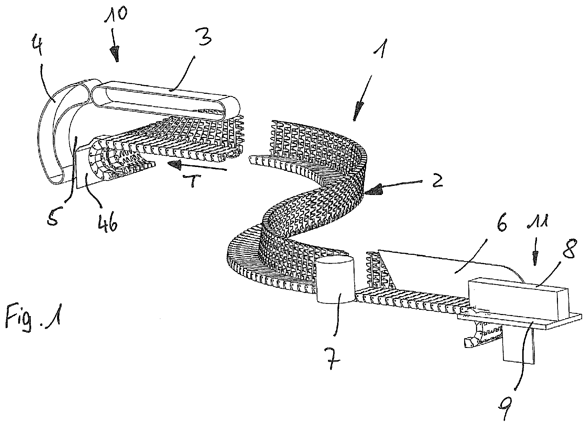

In der Figur 1 ist eine Transportvorrichtung 1 mit einem Endlosfördermittel in Form einer Transportkette 2 zu erkennen, welche mittels einer nicht dargestellten Antriebseinrichtung zu einer Transportbewegung in Transportrichtung T antreibbar ist. Die Transportvorrichtung 1 dient dem Transport von stabförmigen Produkten der Tabak verarbeitenden Industrie, welche an einer Zuführseite 11 über eine Zuführfläche 9 und/oder einen nicht dargestellten Steilförderer zugeführt und an der Abführseite 10 über einen Abführschacht 5 abgeführt werden.

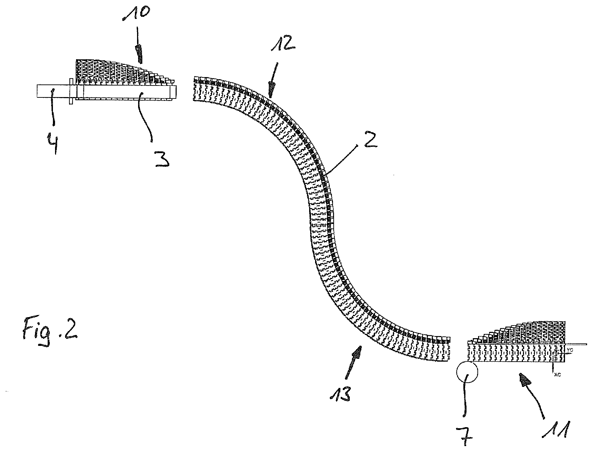

In der Figur 2 ist die Transportvorrichtung 1 der Figur 2 von oben zu erkennen. Die Transportkette 2 ist ausgehend von der Zuführseite 11 in einer ersten Kurve 13 und einer zweiten, entgegengesetzt gekrümmten Kurve 12 zu der Abführseite 10 hin geführt.

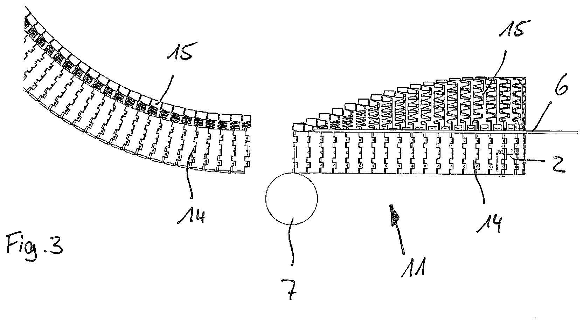

In der Figur 3 ist die Zuführseite 11 vergrößert zu erkennen. An der Zuführseite 11 ist eine seitlich der Transportkette 2 bzw. des darauf transportierten Stapels der Produkte angeordnete Andrückrolle 7 und ein über die Transportkette 2 ragendes Schwert 6 vorgesehen, welche derart beabstandet sind, dass der auf der Transportkette 2 transportierte Stapel der Produkte zwischen der Andrückrolle 7 und dem Schwert 6 hindurchläuft und dabei über die Andrückrolle 7 seitlich zusätzlich ausgerichtet wird. Die Produkte werden dann in einem Produktstapel 8 mit einer definierten Querschnittsgeometrie über der Zuführebene 9 zugeführt.

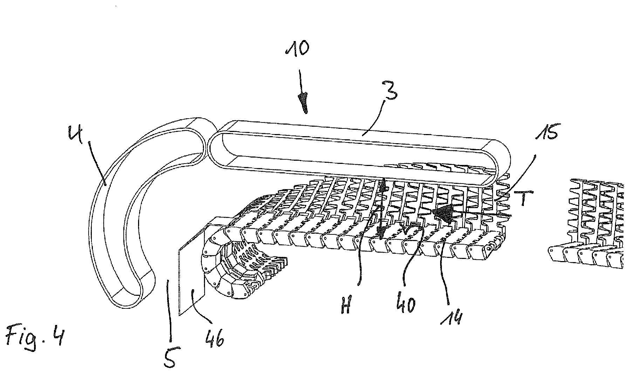

Das in der Figur 4 vergrößert dargestellte Abführfach 5 an der Abführseite 10 ist begrenzt durch zwei Führungsteile 3 und 4, ein Ableitblech 46 und schließlich die Transportkette 2. Ferner ist das Abführfach 5 seitlich noch durch nicht dargestellte Wände begrenzt. Die stabförmigen Produkte wie z.B. Zigaretten, Zigarillos, Sektionen von Elektrozigaretten oder von "Heat not Burn" Produkten oder dergleichen werden in einem Massenstrom von mehreren Schichten von Produkten mit quer zu der Transportrichtung T ausgerichteten Längsachsen zugeführt und in einem Stapel auf die Transportkette 2 geleitet. Die Transportkette 2 ist durch eine Vielzahl von Kettengliedern 14 gebildet, deren Oberflächen sich zu einer Auflagefläche 40 für die zu transportierenden Produkte ergänzen.

Die Höhe H des Stapels der transportierten Produkte wird durch den Abstand des Führungsteils 3 zu der Auflagefläche 40 der Transportkette 2 definiert und kann bedarfsweise durch die Veränderung der Position des Führungsteils 3 verändert werden.

Grundsätzlich dient die Transportvorrichtung 1 dem Transport der Produkte von der Zuführseite 11 zu der Abführseite 10 und kann dabei einen beliebigen Verlauf mit großen Abständen aufweisen, weshalb die Transportkette 2 in den Darstellungen aufgeschnitten dargestellt ist.

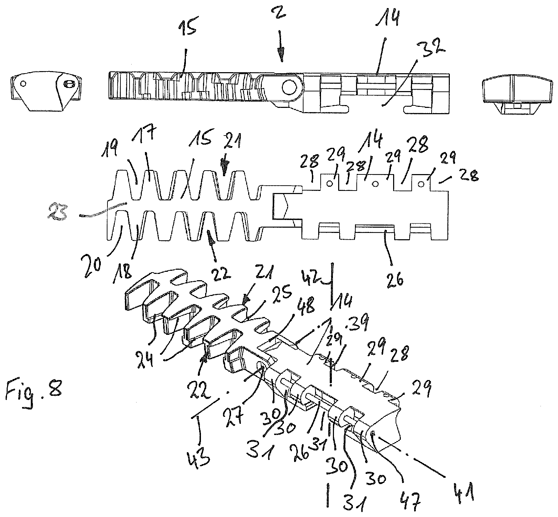

Die Transportkette 2 selbst ist durch eine Vielzahl von einzelnen Kettengliedern 14 gebildet, wovon in der Figur 8 eines in Einzeldarstellung in verschiedenen Ansichten dargestellt ist. Das Kettenglied 14 ist an einem seiner Enden mit einem Stützelement 15 versehen, wobei nicht ausgeschlossen ist, dass an dem anderen, jetzt freien Ende zusätzlich ein zweites Stützelement 15 vorgesehen ist, sofern dies für die Führung des Stapels von Vorteil ist.

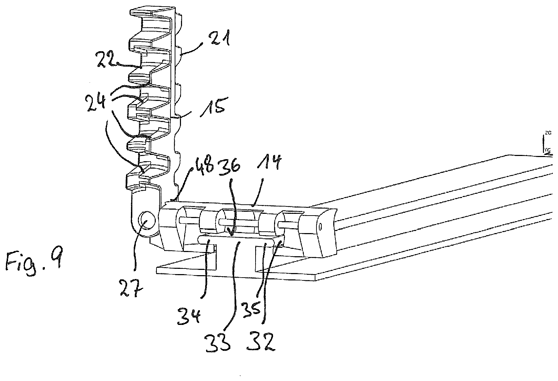

Das Kettenglied 14 weist an seinen beiden Längsseiten jeweils Vorsprünge 29 und 30 mit dazwischen vorgesehenen Ausnehmungen 28 und 31 auf, wobei in den Vorsprüngen 29 und 30 außerdem zueinander fluchtende Öffnungen 39 und 47 vorgesehen sind. Die aneinander angrenzenden Kettenglieder 14 werden miteinander verbunden, indem sie in einem ersten Schritt soweit mit den Vorsprüngen 29 oder 30 in die gegenüberliegenden Ausnehmungen 28 oder 31 des benachbarten Kettengliedes 14 eingeführt werden, dass die Öffnungen 39 und 47 in den Vorsprüngen 29 und 30 der beiden Kettenglieder 14 zueinander fluchten. Anschließend wird in einem zweiten Schritt ein Stift 26 durch die Öffnungen 39 und 47 gesteckt, welcher die beiden Kettenglieder 14 dann miteinander verbindet. Die Längsachse des Stiftes 26 bildet eine erste Schwenkachse 41, um welche die beiden aneinander angrenzenden Kettenglieder 14 zueinander verschwenkbar sind. Die erste Schwenkachse 41 ist parallel zu der Auflagefläche 40 der Transportkette 2 ausgerichtet. Ferner sind die Öffnungen 39 und 47 und der Durchmesser des Stiftes 31 derart bemessen, dass die beiden miteinander verbundenen Kettenglieder 14 zumindest geringe Schwenkbewegungen um eine zweite, senkrecht zu der Auflagefläche 40 ausgerichtete Schwenkachse 42 zueinander ausführen können. Das Kettenglied 14 weist ferner an seiner Unterseite eine Tasche 32 zur Führung des Kettengliedes 14 auf einer in der Figur 9 zu erkennenden Führungsschiene 33 auf.

Das Stützelement 15 ist an dem Ende des Kettengliedes 14 über einen Bolzen 27 gehalten, dessen Längsachse eine dritte Schwenkachse 43 bildet, um die das Stützelement 15 zu dem Kettenglied 14 verschwenkbar ist. Die dritte Schwenkachse 43 ist parallel zu der Transportrichtung T und parallel zu der Auflagefläche 40 der Transportkette 2 ausgerichtet. Ferner weist das Stützelement 15 an seinen beiden Längsseiten jeweils eine sich von einem Mittelsteg 23 weg erstreckende Verzahnung 21 und 22 auf. Die Verzahnungen 21 und 22 sind jeweils durch Zähne 17 und 18 mit dazwischen vorgesehenen Zahnlücken 19 und 20 gebildet, wobei die Zähne 17 und 18 formkorrespondierend zu den Formen der Zahnlücken 19 und 20 ausgebildet sind. Außerdem sind an den Zähnen 17 und 18 jeweils Anschläge 24 und 25 in Form von Stufen vorgesehen, deren Funktion nachfolgend noch näher erläutert wird. Das Stützelement 15 ist mit einem zweiten Anschlag 48 in Form einer Körperkante versehen, welche beim Verschwenken des Stützelementes 15 zur Anlage an der Oberseite des Kettengliedes 14 gelangt und dadurch den Schwenkwinkel des Stützelementes 15 zu dem Kettenglied 14 auf vorzugsweise 90 Grad begrenzt.

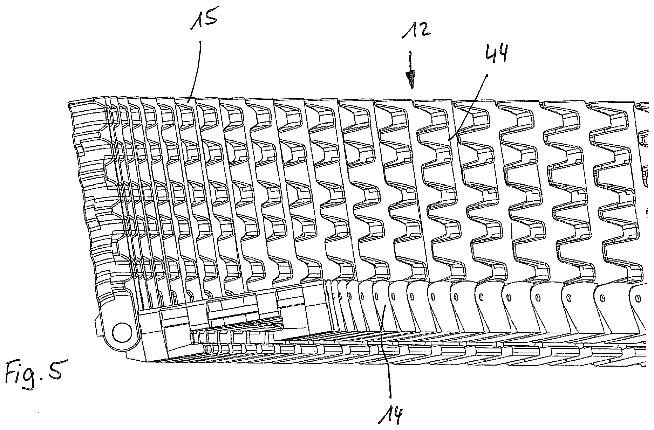

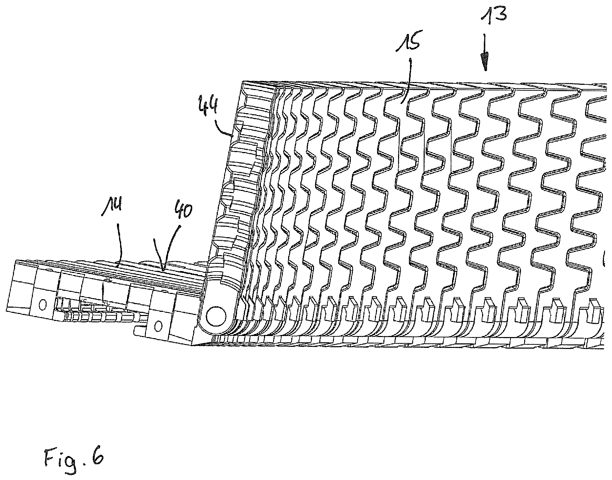

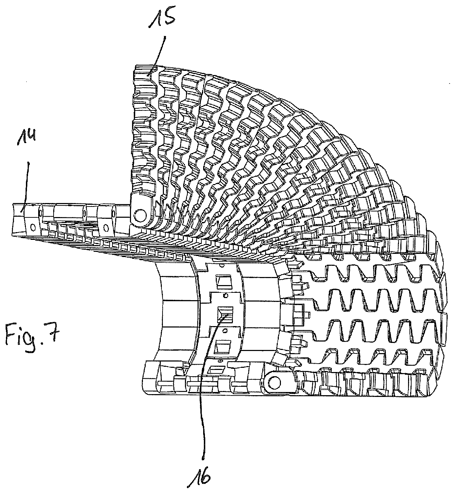

Die erfindungsgemäß weiterentwickelte Transportkette 2 ist durch eine Vielzahl von nach dem oben beschriebenen Prinzip miteinander verbundenen Kettengliedern 14 zusammengesetzt und in den Figuren 5 bis 7 in verschiedenen Abschnitten der Transportbewegung bzw. in verschiedenen Ansichten dargestellt. Die Kettenglieder 14 sind jeweils über die Stifte 31 zu einer zugfesten Kette miteinander verbunden und weisen an ihren Unterseiten jeweils Vertiefungen auf, welche Formschlussgestaltungen 16 zum Eingriff einer nicht dargestellten Antriebseinrichtung bilden. Die Stützelemente 15 der aneinander angrenzenden Kettenglieder 14 greifen mit den Verzahnungen 21 und 22 ineinander und bilden dadurch eine in sich flexible Stützwand 44. Dabei können die Kettenglieder 14 durch Verschwenken um die zweite Schwenkachse 42 zunächst die in der Figur 2 zu erkennenden Kurven 12 oder 13 bilden. Die Stützelemente 15 können dann um die dritten Schwenkachsen 43 in einem Winkel von maximal 90 Grad seitlich zu der durch die Oberflächen der Kettenglieder 14 gebildeten Auflagefläche 40 für die zu transportierenden Produkte entweder an dem Innenradius der Kurve 13 (siehe Figur 6) oder an dem Außenradius der Kurve 12 (siehe Figur 5) hochgeschwenkt werden.

In der Figur 9 ist das Kettenglied 14 auf der Führungsschiene 33 zu erkennen. Die Führungsschiene 33 ist im Querschnitt T-förmig, mit zwei seitlich vorstehenden Randstreben 34 und 35 ausgebildet und greift mit den Randstreben 34 und 35 in entsprechende Nuten der Tasche 32 ein. Die Transportkette 2 ist damit sowohl seitlich als auch in Vertikalrichtung durch die Führungsschiene 33 geführt.

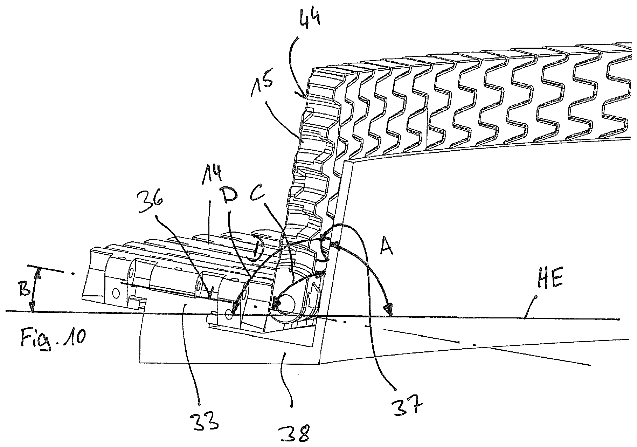

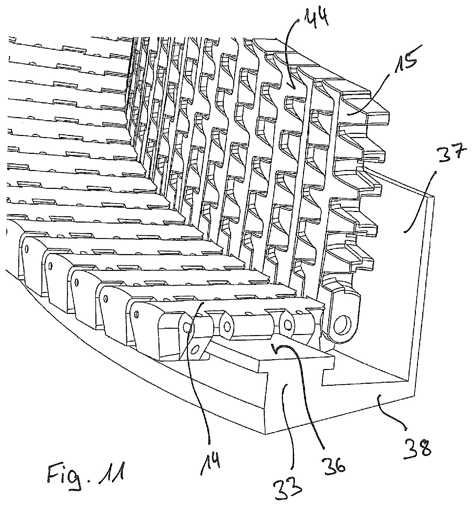

In den Figuren 10 und 11 ist ein Ausschnitt einer Transportvorrichtung 1 mit einer Transportkette 2 und einer durch ein einziges Teil gebildeten Basis 38 zu erkennen, an welcher eine erste Führungsfläche 37 und eine zweite Führungsfläche 36 vorgesehen sind. Die erste Führungsfläche 37 ist an einer hochstehenden Wand der Basis 38 angeordnet und senkrecht zu der Transportrichtung T in einem Winkel von 90 Grad zu der ersten Führungsfläche 36 ausgerichtet. Die Transportkette 2 liegt mit den Außenseiten der Stützelemente 15 an der ersten Führungsfläche 37 an, die erste Führungsfläche 37 gibt damit die Ausrichtung der Stützelemente 15 bzw. der durch die Gesamtheit der Stützelemente 15 gebildeten Stützwand 44 vor. Sofern die Stützelemente 15 eine konstante Dicke in Bezug zu ihrer Längserstreckung aufweisen, entspricht die Ausrichtung der ersten Führungsfläche 37 auch der Ausrichtung der durch die Oberfläche der Stützelemente 15 gebildeten Stützwand. Die zweite Führungsfläche 36 ist durch die Oberfläche der Führungsschiene 33 gebildet und dient der Anlage der Kettenglieder 14 der Transportkette 2, wodurch wiederum die Ausrichtung der Transportkette 2 und insbesondere die Ausrichtung der Auflagefläche 40 der Kettenglieder 14 definiert ist. Damit wird durch die Ausrichtung der ersten Führungsfläche 37 zu der zweiten Führungsfläche 36 auch die Ausrichtung der Stützelemente 15 zu den Kettengliedern 14 vorgegeben. Soweit die Kettenglieder 14 ebenfalls eine konstante Dicke entlang ihrer Längserstreckung aufweisen, entspricht die Ausrichtung der zweiten Führungsfläche 36 auch der Ausrichtung der durch die Oberfläche der Kettenglieder 14 gebildeten Auflagefläche 40.

Die zweite Führungsfläche 36 ist in einem Winkel B von vorzugsweise 0 bis 20 Grad zu einer Horizontalebene HE, in Richtung der Stützelemente 15 abfallend ausgerichtet, während die erste Führungsfläche 37 in einem Winkel A von kleiner als 90 Grad vorzugsweise von 70 bis 85 Grad zu der Horizontalebene HE und von den Kettengliedern 14 weg gerichtet ist. Ferner ist die Summe der Winkel A und B bevorzugt 90 Grad, so dass die Oberflächen der Stützelemente 15 in einem Winkel von 90 Grad zu der Auflagefläche 40 der Kettenglieder 14 ausgerichtet ist.

Damit wird der auf den Kettengliedern 14 transportierte Stapel der Produkte seitlich leicht gegen die Stützelemente 15 gekippt, wodurch der Stapel vorausgerichtet und der Tendenz des Umkippens des Stapels insbesondere in den Kurven 12 und 13 entgegengewirkt wird. Ferner wird der Stapel aufgrund der 90 Grad Anordnung der beiden Führungsflächen 36 und 37 bzw. der 90 Grad Ausrichtung der Auflagefläche 40 zu der Oberfläche der Stützelemente 15 mit einem rechteckförmigen Querschnitt geführt, und die Produkte werden mit einer planen seitlichen Oberfläche geführt, welche sich durch die Stirnseiten der Produkte ergibt.

Die erste Führungsfläche 37 ist an der Abführseite 10 und an der Zuführseite 11 jeweils als Rampe mit einem in Transportrichtung T in Bezug zu der Auflagefläche 40 bzw. zu der zweiten Führungsfläche 36 an der Zuführseite 11 abnehmenden Winkel D und an der Abführseite 10 mit einem zunehmenden Winkel D zu der Horizontalebene HE geformt. Damit werden die daran abgleitenden Stützelemente 15 an der Zuführseite 11 durch die Form der ersten Führungsfläche 37 aus einer Horizontalausrichtung bzw. aus einer mit den Kettengliedern 14 fluchtenden Ausrichtung in die in der Figur 10 zu erkennende aufrechte Winkelausrichtung gedrängt und an der Abführseite 10 aus dieser wieder zurück in die Horizontalausrichtung bewegt.

Dabei beträgt die Länge des Abschnittes der Rampe, in welchem die Stützelemente 15 verschwenkt werden, wenigstens 300 mm, so dass die Stützelemente 15 bei einem Gesamtschwenkwinkel A von 90 Grad um einen Winkel A von 3 Grad/10 mm in Transportrichtung T im Bereich der Rampe während der Transportbewegung verschwenkt werden. Bei einer Breite der Stützelemente 15 in Richtung der Transportbewegung von 10 mm bis 20 mm ergibt sich damit ein maximaler Schwenkwinkel von 3 Grad bis 6 Grad der Stützelemente 15 zueinander, welcher zudem durch die Anschläge 24 und 25 begrenzt wird. Damit können die bei dem Verschwenken der Stützelemente 15 entstehenden Freiräume, Ecken und Stufen auf ein Maß reduziert werden, dass die Produkte darin nicht mit ihren Stirnseiten eintreten können und damit die Bewegung der Transportkette 2 nicht behindern oder sogar blockieren.

In der beschriebenen Transportvorrichtung 1 erfolgt das seitliche Stützen der Produkte durch eine Stützwand 44, welche durch eine Vielzahl von einzelnen Stützelementen 15 gebildet ist. Damit kann das Transportverfahren insgesamt verbessert werden, indem der Stapel zusätzlich seitlich geführt wird. Als Stützwand 44 können aber auch andere in sich flexible Wände wie z.B. Gewebebänder, Elastomerbänder oder dergleichen verwendet werden, soweit sie in sich ausreichend flexibel sind und so an den Kettengliedern 14 gehalten werden können, dass sie um die dritte Schwenkachse 43 gegenüber den Kettengliedern 14 verschwenkt werden können. Die Verwendung der beschriebenen Stützelemente 15 ist jedoch insofern vorteilhaft, da sie durch die ineinander greifenden Verzahnungen 21 und 22 eine Flexibilität zueinander aufweisen, und dennoch aufgrund ihrer Eigensteifigkeit eine formstabile Führung des Stapels ermöglichen. Ferner ist es bei dem vorgeschlagenen Transportverfahren und der Transportvorrichtung 1 besonders wichtig, dass die zweite Führungsfläche 36 bzw. die Auflagefläche 40 der Kettenglieder 14 zumindest in den Kurven 12 und 13 leicht in Richtung der Stützwand geneigt werden, damit sich der Stapel seitlich an der Stützwand anlehnt. Dabei kann es sinnvoll sein, den Winkel B der zweiten Führungsfläche 36 und der Auflagefläche 40 bei größeren Transportgeschwindigkeiten weiter zu vergrößern, um der Kippneigung des Stapels entgegen zu wirken.

Ferner können sowohl die Kettenglieder 14 als auch die Stützelemente 15 beim Transport der Produkte leicht um ihre Längsachsen tordiert werden, wodurch sich die Oberfläche der Stützelemente 15 und die Auflagefläche 40 der Kettenglieder 14 dem Stapel bzw. den Führungsflächen 36 und 37 zusätzlich anpassen können.

Ferner erfolgt der Antrieb der Transportkette 2 über ihre mittlere Faser, und die Transportkette 2 wird über die Führungsschiene 33 in der Mitte geführt, wodurch die Reibungsverluste gegenüber einer Führung der Transportkette 2 an ihren Randseiten reduziert werden können. Dies ist vor allem dadurch begründet, da die Kettenglieder 14 bei einer mittigen Führung im Bereich der Führung weniger zusammengedrückt werden, als dies bei einer Führung der Transportkette 2 in den radial weiter außen angeordneten Randseiten der Fall ist.

Denkbar wäre es auch, die Stützelemente 15 über Kugelgelenke mit den Kettengliedern 14 zu verbinden, so dass sich diese zusätzlich durch eine Schrägstellung gegenüber der Transportrichtung T zu einer Stützwand 44 mit einer schrägen, stufenlosen Anlagefläche im Bereich der Rampen ergänzen können. Ferner können dadurch innere Spannungen in dem Gelenkverbund zwischen den Stützelementen 15 und den Kettengliedern 14 vermieden bzw. reduziert werden. Außerdem kann die Montage vereinfacht werden, indem die Kugelgelenke durch clipsbare Kugelkopfverbindungen verwirklicht sind, welche einen einzelnen Austausch bzw. Montage der Stützelemente 15 ohne jegliches Werkzeug ermöglichen.

## Patentansprüche

1. Transportkette (2) für stabförmige Produkte der Tabak verarbeitenden Industrie mit
- einer Vielzahl von miteinander verbundenen Kettengliedern (14), deren Oberflächen sich an einer Seite zu einer Auflagefläche (40) für die Produkte ergänzen, wobei
- die aneinander angrenzenden Kettenglieder (14) jeweils um erste Schwenkachsen (41) und um zweite Schwenkachsen (42) verschwenkbar miteinander verbunden sind, wobei
- die ersten Schwenkachsen (41) parallel zu der Auflagefläche (40) und quer zu der Längsrichtung der Transportkette (2) ausgerichtet sind, und
- die zweiten Schwenkachsen (42) quer zu der Auflagefläche (40) und quer zu der Längsrichtung der Transportkette (2) ausgerichtet sind,
**dadurch gekennzeichnet, dass**
- an wenigstens einem der beiden Enden jeweils eines Kettengliedes (14) mindestens ein Stützelement (15) vorgesehen ist, welches zu dem Kettenglied (14) um eine dritte, in Längsrichtung der Transportkette (2) ausgerichtete Schwenkachse (43) verschwenkbar ist.

2. Transportkette (2) nach Anspruch 1, **dadurch gekennzeichnet, dass**
- das Stützelement (15) eine größere Erstreckung quer zu der Transportrichtung (T) aufweist, als die maximale Höhe (H) des zu transportierenden Stapels der Produkte.

3. Transportkette (2) nach Anspruch 1 oder 2, **dadurch gekennzeichnet, dass**
- an mehreren Kettengliedern (14) jeweils ein Stützelement (15) vorgesehen ist, und
- die Stützelemente (15) der Kettenglieder (14) unabhängig voneinander gegenüber jeweils einem Kettenglied (14) verschwenkbar sind.

4. Transportkette (2) nach Anspruch 3, **dadurch gekennzeichnet, dass**
- die Stützelemente (15) mit Verzahnungen (21,22) ineinander greifen, wobei
- die Verzahnungen (21,22) an den einander zugewandten Randseiten der Stützelemente (15) angeordnet sind, sich in Längsrichtung der Stützelemente (15) erstrecken und derart ausgerichtet sind, dass die Zahnlücken (19,20) in Bezug zu der Umfangsrichtung um die dritten Schwenkachsen (43) offen sind und die Stützelemente (15) durch die offenen Zahnlücken (19,20) eine Relativbewegung um die dritten Schwenkachsen (43) zueinander ausführen können.

5. Transportkette (2) nach einem der vorangegangenen Ansprüche, **dadurch gekennzeichnet, dass**
- an den Kettengliedern (14) eine Vielzahl von sich zu einer Stützwand (44) ergänzenden Stützelementen (15) vorgesehen sind.

6. Transportkette (2) nach einem der vorangegangenen Ansprüche, **dadurch gekennzeichnet, dass**
- die Bewegungen der Stützelemente (15) zueinander durch erste Anschläge (24,25) begrenzt sind.

7. Transportkette (2) nach einem der vorangegangenen Ansprüche, **dadurch gekennzeichnet, dass**
- die Bewegungen des Stützelementes (15) zu dem Kettenglied (14) durch wenigstens einen zweiten Anschlag (48) begrenzt ist.

8. Transportvorrichtung (1) mit einer Transportkette (2) nach einem der Ansprüche 1 bis 7, **dadurch gekennzeichnet, dass**
- eine feststehende erste Führungsfläche (37) vorgesehen ist, an welcher die Transportkette (2) während der Transportbewegung mit den Stützelementen (15) zur Anlage gelangt, wobei
- die erste Führungsfläche (37) eine derartige Kontur aufweist, dass die Stützelemente (15) während der Transportbewegung durch die Anlage an der ersten Führungsfläche (37) in eine Winkelstellung zu den Kettengliedern (14) gedrängt werden.

9. Transportvorrichtung (1) nach Anspruch 8, **dadurch gekennzeichnet, dass**
- die erste Führungsfläche (37) derart geformt ist, dass der Winkel (A) zwischen einer Horizontalebene (HE) und der ersten Führungsfläche (37) in Transportrichtung (T) wenigstens abschnittsweise zunimmt.

10. Transportvorrichtung (1) nach Anspruch 8 oder 9, **dadurch gekennzeichnet, dass**
- die erste Führungsfläche (37) wenigstens in einem Abschnitt in einem Winkel (A) von kleiner als 90 Grad vorzugsweise von 85 bis 60 Grad zu der Horizontalebene (HE) ausgerichtet ist.

11. Transportvorrichtung (1) nach einem der Ansprüche 8 bis 10, **dadurch gekennzeichnet, dass**
- eine zweite Führungsfläche (36) vorgesehen ist, auf der die Transportkette (2) mit den Kettengliedern (14) wenigstens abschnittsweise aufliegt, welche die Ausrichtung der Kettenglieder (14) durch ihre Formgebung während der Transportbewegung vorgibt.

12. Transportverfahren für stabförmige Produkte der Tabak verarbeitenden Industrie mit
- einem bandförmigen Endlosfördermittel, auf dem die Produkte in einem Stapel in einer Ausrichtung mit quer zu einer Transportrichtung (T) ausgerichteten Längsachsen aufliegen, **dadurch gekennzeichnet, dass**
- an wenigstens einer Randseite des Endlosfördermittels eine verschwenkbare Stützwand (44) vorgesehen ist, welche wenigstens in einer Kurve (12,13) in eine Winkelstellung in Richtung des auf dem Endlosfördermittel aufliegenden Stapels der Produkte verschwenkt wird.

13. Transportverfahren nach Anspruch 12, **dadurch gekennzeichnet, dass**
- die Stützwand (44) durch das Anliegen an einer ersten Führungsfläche (37) während der Transportbewegung verschwenkt wird.

14. Transportverfahren nach einem der Ansprüche 12 oder 13, **dadurch gekennzeichnet, dass**
- das Endlosfördermittel wenigstens abschnittsweise in einen Winkel (A), vorzugsweise kleiner als 20 Grad, zu einer Horizontalebene (HE) in Richtung der Stützwand (44) abfallend verschwenkt wird.

15. Transportverfahren nach einem der Ansprüche 12 bis 14, **dadurch gekennzeichnet, dass**
- die Stützwand (44) an der Seite des Endlosfördermittels verschwenkt wird, welche den Innenradius der Kurve (12,13) bildet.

## Claims

1. Transport chain (2) for rod-shaped products of the tobacco processing-industry with
- a plurality of interconnected chain links (14) having surfaces which complement each other on one side to form a support surface (40) for the products, wherein
- the adjacent chain links (14) are each pivotally connected to one another about first pivot axes (41) and about second pivot axes (42), wherein
- the first pivot axes (41) are aligned parallel to the support surface (40) and transverse to the longitudinal direction of the transport chain (2), and
- the second pivot axes (42) being aligned transversely to the support surface (40) and transversely to the longitudinal direction of the transport chain (2),
**characterized in that**
- at least one supporting element (15) is provided at at least one of the two ends of a respective chain link (14), which supporting element can be pivoted relative to the chain link (14) about a third pivot axis (43) aligned in the longitudinal direction of the transport chain (2).

2. Transport chain (2) according to claim 1, **characterized in that**
- the supporting element (15) comprises a greater extension transversely to the transport direction (T) than the maximum height (H) of the stack of products to be transported.

3. Transport chain (2) according to claim 1 or 2, **characterized in that**
- a supporting element (15) is provided on each of a plurality of chain links (14), and
- the supporting elements (15) of the chain links (14) can be pivoted independently of one another relative to a respective chain link (14).

4. Transport chain (2) according to claim 3, **characterized in that**
- the supporting elements (15) engage in one another with toothings (21, 22), wherein
- the toothings (21, 22) are arranged on the edge sides of the supporting elements (15) facing one another, extend in the longitudinal direction of the supporting elements (15) and are aligned in such a way that the tooth gaps (19, 20) are open in relation to the circumferential direction about the third pivot axes (43) and the supporting elements (15) are able to execute a relative movement to one another about the third pivot axes (43) through the open tooth gaps (19, 20).

5. Transport chain (2) according to one of the preceding claims, **characterized in that**
- a plurality of supporting elements (15) which complement each other to form a supporting wall (44) are provided on the chain links (14).

6. Transport chain (2) according to one of the preceding claims, **characterized in that**
- the movements of the supporting elements (15) relative to one another are limited by first stops (24, 25).

7. Transport chain (2) according to one of the preceding claims, **characterized in that**
- the movements of the supporting element (15) relative to the chain link (14) are limited by at least one second stop (48).

8. Transport device (1) with a transport chain (2) according to one of the claims 1 to 7, **characterized in that**
- a fixed first guide surface (37) is provided, against which the transport chain (2) abuts during the transport movement with the supporting elements (15), wherein
- the first guide surface (37) comprises such a contour that the supporting elements (15) are forced into an angular position relative to the chain links (14) during the transport movement by the abutment against the first guide surface (37).

9. Transport device (1) according to claim 8, **characterized in that**
- the first guide surface (37) is shaped in such a way that the angle (A) between a horizontal plane (HE) and the first guide surface (37) increases in the transport direction (T) at least in sections.

10. Transport device (1) according to claim 8 or 9, **characterized in that**
- the first guide surface (37) is aligned at least in one section at an angle (A) of less than 90 degrees, preferably from 85 to 60 degrees, to the horizontal plane (HE).

11. Transport device (1) according to one of the claims 8 to 10, **characterized in that**
- a second guide surface (36) is provided, on which the transport chain (2) rests with the chain links (14) at least in sections, which guide surface sets the alignment of the chain links (14) by its shaping during the transport movement.

12. Transport method for rod-shaped products of the tobaccoprocessing industry with
a belt-shaped endless conveyor means on which the products rest in a stack in an orientation with longitudinal axes aligned transversely to a transport direction (T),
**characterized in that**
- a pivotable support wall (44) is provided on at least one edge side of the endless conveyor means, which support wall is pivoted at least in one curve (12, 13) into an angular position in the direction of the stack of products resting on the endless conveyor means.

13. Transport method according to claim 12, **characterized in that**
- the support wall (44) is pivoted by abutting against a first guide surface (37) during the transport movement.

14. Transport method according to one of the claims 12 or 13, **characterized in that**
- the endless conveying means is pivoted at least in sections at an angle (A), preferably smaller than 20 degrees, to a horizontal plane (HE) in the direction of the supporting wall (44) in a descending manner.

15. Transport method according to one of the claims 12 to 14, **characterized in that**
- the supporting wall (44) is pivoted on the side of the endless conveying means which forms the inner radius of the curve (12, 13).

## Revendications

1. Chaîne de transport (2) pour des produits en forme de tige de l'industrie de traitement du tabac, comportant :
- une pluralité de maillons de chaîne (14) reliés les uns aux autres, dont les surfaces se complètent d'un côté pour former une surface d'appui (40) pour les produits, dans laquelle
- les maillons de chaîne (14) adjacents sont reliés les uns aux autres de manière à pouvoir pivoter respectivement autour de premiers axes de pivotement (41) et autour de deuxièmes axes de pivotement (42), dans laquelle
- les premiers axes de pivotement (41) sont orientés parallèlement à la surface d'appui (40) et transversalement à la direction longitudinale de la chaîne de transport (2), et
- les deuxièmes axes de pivotement (42) sont orientés transversalement à la surface d'appui (40) et transversalement à la direction longitudinale de la chaîne de transport (2),
**caractérisée en ce que**
- au moins un élément de support (15) est prévu à au moins l'une des deux extrémités d'un maillon de chaîne (14) respectif, lequel peut pivoter par rapport au maillon de chaîne (14) autour d'un troisième axe de pivotement (43) orienté dans la direction longitudinale de la chaîne de transport (2).

2. Chaîne de transport (2) selon la revendication 1, **caractérisée en ce que**
- l'élément de support (15) présente une plus grande extension transversalement à la direction de transport (T) que la hauteur maximale (H) de la pile de produits à transporter.

3. Chaîne de transport (2) selon la revendication 1 ou 2, **caractérisée en ce que**
- un élément de support (15) est prévu à chaque fois sur plusieurs maillons de chaîne (14), et
- les éléments de support (15) des maillons de chaîne (14) peuvent pivoter indépendamment les uns des autres par rapport à un maillon de chaîne (14) respectif.

4. Chaîne de transport (2) selon la revendication 3, **caractérisée en ce que**
- les éléments de support (15) s'engagent les uns dans les autres par des dentures (21, 22), dans laquelle
- les dentures (21, 22) sont disposées sur les côtés de bord tournés l'un vers l'autre des éléments de support (15), s'étendent dans la direction longitudinale des éléments de support (15) et sont orientées de telle sorte que les entredents (19, 20) sont ouverts par rapport à la direction circonférentielle autour des troisièmes axes de pivotement (43) et les éléments de support (15) peuvent exécuter un mouvement relatif les uns par rapport aux autres autour des troisièmes axes de pivotement (43) à travers les entredents (19, 20) ouverts.

5. Chaîne de transport (2) selon l'une des revendications précédentes, **caractérisée en ce que**
- une pluralité d'éléments de support (15) se complétant pour former une paroi de support (44) sont prévus sur les maillons de chaîne (14).

6. Chaîne de transport (2) selon l'une des revendications précédentes, **caractérisée en ce que**
- les mouvements des éléments de support (15) les uns par rapport aux autres sont limités par des premières butées (24, 25).

7. Chaîne de transport (2) selon l'une des revendications précédentes, **caractérisée en ce que**
- les mouvements de l'élément de support (15) par rapport au maillon de chaîne (14) sont limités par au moins une deuxième butée (48).

8. Dispositif de transport (1) comportant une chaîne de transport (2) selon l'une des revendications 1 à 7, **caractérisé en ce que**
- une première surface de guidage fixe (37) est prévue, contre laquelle la chaîne de transport (2) vient s'appuyer avec les éléments de support (15) pendant le mouvement de transport, dans lequel
- la première surface de guidage (37) présente un contour tel que, pendant le mouvement de transport, les éléments de support (15) sont poussés dans une position angulaire par rapport aux maillons de chaîne (14) par l'appui contre la première surface de guidage (37).

9. Dispositif de transport (1) selon la revendication 8, **caractérisé en ce que**
- la première surface de guidage (37) est formée de telle sorte que l'angle (A) entre un plan horizontal (HE) et la première surface de guidage (37) augmente dans la direction de transport (T) au moins sur certaines parties.

10. Dispositif de transport (1) selon la revendication 8 ou 9, **caractérisé en ce que**
- la première surface de guidage (37) est orientée au moins sur une partie selon un angle (A) de moins de 90 degrés, de préférence de 85 à 60 degrés, par rapport au plan horizontal (HE).

11. Dispositif de transport (1) selon l'une des revendications 8 à 10, **caractérisé en ce que**
- une deuxième surface de guidage (36) est prévue, sur laquelle la chaîne de transport (2) repose avec les maillons de chaîne (14) au moins sur certaines parties, laquelle prédéfinit l'orientation des maillons de chaîne (14) pendant le mouvement de transport par sa configuration.

12. Procédé de transport de produits en forme de tige de l'industrie de traitement du tabac, avec
- un moyen de transport sans fin en forme de bande sur lequel les produits reposent en une pile dans une orientation avec des axes longitudinaux orientés transversalement à une direction de transport (T), **caractérisé en ce que**
- une paroi de support (44) pivotante est prévue sur au moins un côté de bord du moyen de transport sans fin, laquelle pivote au moins selon une courbe (12, 13) dans une position angulaire en direction de la pile de produits reposant sur le moyen de transport sans fin.

13. Procédé de transport selon la revendication 12, **caractérisé en ce que**
- la paroi de support (44) pivote en s'appuyant contre une première surface de guidage (37) pendant le mouvement de transport.

14. Procédé de transport selon l'une des revendications 12 ou 13, **caractérisé en ce que**
- le moyen de transport sans fin pivote au moins sur certaines parties selon un angle (A), de préférence inférieur à 20 degrés, par rapport à un plan horizontal (HE) en descendant en direction de la paroi de support (44).

15. Procédé de transport selon l'une des revendications 12 à 14, **caractérisé en ce que**
- la paroi de support (44) pivote sur le côté du moyen de transport sans fin qui forme le rayon intérieur de la courbe (12, 13).
